# EUROPÄISCHE PATENTANMELDUNG

(11) **EP 1 837 564 A1**
(43) Veröffentlichungstag der Anmeldung: **26.09.2007**
(21) Anmeldenummer: 06005968.0
(22) Anmeldetag: 23.03.2006
(51) Int. Cl.: F16J 15/32, F16J 15/10

(54) **Dichtring**

(71) Anmelder: Carl Freudenberg KG, 69469 Weinheim (DE)
(72) Erfinder: Fietz, Roland, 35279 Neustadt (DE)

(57) **Zusammenfassung**

Dichtring, umfassend zumindest 8 Dichtkanten (1, 2, 3, 4, ..., 10).

## Beschreibung

### Technisches Gebiet

Die Erfindung betrifft einen Dichtring.

### Stand der Technik

Dichtringe sind allgemein bekannt, beispielsweise als O-Ringe.

Diese Universal-Dichtringe können zur statischen oder dynamischen Abdichtung von Maschinenelementen zur Anwendung gelangen. Ein Vorteil ist die Vielfalt ihrer Einsatzmöglichkeiten sowie die einfache und kostengünstige Herstellbarkeit.

O-Ringe haben den Nachteil, dass während ihres Einbaus oder während ihrer bestimmungsgemäßen Verwendung, insbesondere bei dynamischen Dichtaufgaben mit Axialbewegung der gegeneinander abzudichtenden Maschinenelemente, die Gefahr des Verdrehens / Verdrillens der 0-Ringe besteht.

Außerdem ist bei dynamischen Dichtaufgaben für eine gute Dichtwirkung eine starke Verpressung der vorbekannten Dichtringe innerhalb ihres Einbauraums erforderlich, Daraus resultieren hohe Reibungskräfte bei Relativbewegung der gegeneinander abzudichtenden Maschinenelemente, weil sich die runden Dichtkanten der Dichtringe dann stark abplatten und sich eine große Auflagefläche an den abzudichtenden Maschinenelementen ergibt.

O-Ringe haben weiter den Nachteil, dass sie herstellungsbedingt Pressgrate aufweisen, die meist am Innen- und Außendurchmesser und somit genau auf wichtigen Funkfionsflächen für viele Dichtungsanwendungen liegen.

Durch den kreisrunden Querschnitt von O-Ringen ist die Zahl der Dichtstellen im Einbauraum, beispielsweise in einer klassischen Rechtecknut, begrenzt auf zwei Dichtflächen, zum Beispiel den Außen- und Innendurchmesser oder die axialen Stirnseiten.

### Darstellung der Erfindung

Der Erfindung liegt die Aufgaben zu Grunde, einen universell einsetzbaren Dichtring der eingangs genannten Art derart weiter zu entwickeln, dass die zuvor genannten Nachteile vermieden werden und der Dichtring zur Abdichtung flüssiger oder gasförmiger Medien verbesserte Gebrauchseigenschaften aufweist. Der erfindungsgemäße Dichtring soll bei relativ höheren Drücken und/oder, bei dynamischen Dichtaufgaben mit hohen Relativgeschwindigkeiten zuverlässig abdichten.

Diese Aufgabe wird erfindungsgemäß durch einen Dichtring gemäß Anspruch 1 gelöst. Auf vorteilhafte Ausgestaltungen nehmen die Unteransprüche Bezug.

Zur Lösung der Aufgabe ist ein Dichtring vorgesehen, umfassend zumindest 8 Dichtkanten. Ein solcher Dichtring ist universell einsetzbar, sowohl für statische als auch für dynamische Dichtaufgaben. Der Dichtring kann zur Abdichtung flüssiger oder gasförmiger Medien zur Anwendung gelangen und zum Beispiel an Stelle eines herkömmlichen O-Rings eingesetzt werden.

Zur Abdichtung dynamisch oszillierender Axialbewegungen, beispielsweise zur Abdichtung translatorisch hin- und her bewegbarer Stangen oder Kolben, kann der erfindungsgemäße Dichtring .ebenfalls eingesetzt werden, genauso wie zur Abdichtung dynamischer Rotationsbewegungen von rotierenden, schwenkenden oder schraubenartig bewegter Wellen, Stangen oder Spindeln.

Ein Vorteil eines Dichtrings mit zumindest 8 Dichtkanten ist hauptsächlich darin zu sehen, dass er ähnlich einfach und kostengünstig herstellbar ist, wie ein O-Ring gleichen Materials, jedoch dem gegenüber beim Einbau und während der bestimmungsgemäßen Verwendung nicht die Gefahr eines Verdrehens / Verdrillens besteht und dadurch nicht die Gefahr von unerwünschten Undichtigkeiten.

Durch die hohe Anzahl von Dichtkanten weist der beanspruchte Dichtring eine' verbesserte Dichtwirkung auf. Bezogen auf 0-Ringe hat der beanspruchte Dichtring anders gestaltete Dichtkanten; anstelle der runden Dichtkanten bei von 0-Ringen, sind die Dichtkanten des beanspruchten Dichtrings durch einander durchschneidende Kegelflächen begrenzt. Durch die scharfkantige Ausbildung der Dichtkanten liegen diese mit höherer Flächenpressung an den abzudichtenden Oberflächen an und dichten deshalb besser ab.

Die Dichtkanten können jeweils durch einander durchschneidende Kegelflächen begrenzt sein.

Gemäß einer vorteilhaften Ausgestaltung kann es vorgesehen sein, dass drei der Dichtkanten radial innenseitig und drei der Dichtkanten radial außenseitig angeordnet sind und dass die inneren Radialdichtkanten und die äußeren Radialdichtkanten einander jeweils mit axialem Abstand benachbart zugeordnet sind. Die inneren Radialdichtkanten sind einander dabei in einer funktionstechnischen Reihenschaltung zugeordnet, ebenso wie die äußeren Radiaidichtkanten. Die dem abzudichtenden Raum am nächsten zugewandte Dichtkante übernimmt die Haupt-Dichtfunktion, während die beiden nachgeschalteten Dichtkanten Leckage abdichten, die die vorgeschaltete Dichtkante passiert hat.

Die inneren Radialdichtkanten und die äußeren Radialdichtkanten sind einander jeweils in einer gedachten Radialebene radial gegenüber liegend angeordnet. Hierbei ist von Vorteil, dass die Radialdichtkanten, die in einer gedachten Radialebene angeordnet sind und sich gegenseitig derart beeinflussen, dass eine vergleichsweise hohe Flächenpressung der jeweiligen Dichtkanten am abzudichtenden Maschinenelement erzielt werden kann. Außerdem wird durch eine derartige Ausgestaltung sicher gestellt, dass der Dichtring im eingebauten Zustand frei von unerwünschten Drehmomenten ist.

Zumindest eine der beiden Stirnseiten kann zwei Axialdichtkanten aufweisen, die einander mit radialem Abstand benachbart zugeordnet sind und jeweils durch einander durchschneidende Kegelflächen begrenzt sind. Zusätzlich zur radialen Abdichtung kann durch die Axialdichtkanten auch eine axiale Abdichtung erfolgen, beispielsweise dann, wenn der Dichtring in einer klassischen Rechtecknut eingebaut ist.

Bevorzugt können beide Stirnseiten jeweils zwei Axialdichtkanten aufweisen. Unabhängig von welcher Seite der Dichtring axial mit Druck beaufschlagt wird, erfolgt eine axiale Abdichtung im Einbauraum.

Radial zwischen den einander benachbarten Axialdichtkanten zumindest einer Stirnseite kann ein zumindest teilweise umlaufender Stützwulst angeordnet sein, der eine geringere Erstreckung in axialer Richtung aufweist, als die Axialdichtkanten. Weiter bevorzugt weist der Dichtring im Bereich jeder Stirnseite einen solchen Stützwulst auf. Der Dichtring kann dadurch mit höheren axialen Drücken beaufschlagt werden. Bevor die Axialdichtkanten einer differenzdruckbedingten, unerwünscht großen Verformung ausgesetzt sind, legt sich der radial zwischen den Axialdichtkanten angeordnete Stützwulst an eine benachbarte abzudichtende Fläche an und begrenzt dadurch eine weitere Verformung der Axialdichtkanten. Eine mechanische Überbeanspruchung der Axialdichtkanten wird dadurch verhindert. Der Dichtring weist gleich bleibend gute Gebrauchseigenschaften während einer langen Gebrauchsdauer auf.

Der Dichtring kann zu einer gedachten, axial mittig angeordneten Radialebene symmetrisch ausgebildet sein. Der Dichtring weist dadurch übereinstimmende Gebrauchseigenschaften auf, unabhängig davon, auf welcher der beiden axialen Stirnseiten der vergleichsweise höhere Differenzdruck anliegt.

Die axial mittig angeordneten Radialdichtkanten können einen größeren Dichtkantenradius aufweisen, als die jeweils axial beiderseits benachbart angeordneten Radialdichtkanten. Die mittig angeordneten Radialdichtkanten haben, im Gegensatz zu den axial beiderseits benachbart angeordneten Radialdichtkanten, nicht nur eine Dichtfunktion, sondern auch eine Stützfunktion, ähnlich dem Stützwulst zwischen den beiden radial zueinander benachbart angeordneten Axiaidichtkanten. Der Dichtkantenradius der axial mittig angeordneten Radialdichtkanten ist jedoch immer noch deutlich kleiner als der Radius von O-Ringen in einer entsprechenden Größe, Die axial mittig angeordneten Radialdichtkanten weisen dadurch sowohl eine gute Dichtfunktion als auch eine gute Stützfunktion auf.

Mit Ausnahme der mittig angeordneten Radialdichtkanten, können alle Dichtkanten übereinstimmend ausgebildet sein. Im Gegensatz zu spezialisierten Dichtelementen, wie zum Beispiel Nutringen, die meist als Kolben- oder Stangendichtung auf den jeweiligen Einsatzfall optimiert sind, hat der erfindungsgemäße Dichtring den Vorteil der universellen Einsatzmöglichkeit.

Die Übergangsbereiche zwischen den jeweils axial benachbarten Radialdichtkanten und/oder zwischen den jeweils radial benachbarten Axialdichtkanten, können, im Längsschnitt betrachtet, konkav ausgebildet sein. Dadurch ist von Vorteil, dass auch bei einer Druckbeaufschlagung des Dichtrings nur die Dichtkanten an der abzudichtenden Oberfläche anliegen; eine großflächige Berührung der abzudichtenden Oberfläche durch den Dichtring wird dadurch vermieden und die Reibungsverluste, ebenso wie die Reibungswärme, werden auf ein Minimum begrenzt.

Die Übergangsbereiche zwischen den inneren oder äußeren Radialdiehtkanten können eine geringere radiale Tiefe aufweisen, als die Übergangsbereiche zwischen den äußeren oder inneren Radialdichtkanten.

Die beschriebene Ausgestaltung hängt vom Verfahren der Herstellung des Dichtrings ab. Durch das Verhältnis der unterschiedlichen radialen Tiefen der Übergangsbereiche am Innen- und Außendurchmesser ist es möglich, den Dichtring bei der Herstellung definiert auf der Auswerferseite eines Werkzeugs zu halten und somit einen störungsfreien vollautomatischen Herstellungsprozess zu gewährleisten. Ist das Werkzeug zur Herstellung des Dichtrings mit einem innen angreifenden Pilzauswerfer versehen, ist die größere radiale Tiefe der Übergangsbereiche am Außendurchmesser des Dichtrings vorgesehen. Durch eine solche Ausgestaltung bleibt der Dichtring mit seinen tieferen Übergangsbereichen auf der Auswerferseite hängen und kann mit dem Pilzauswerfer ausgestoßen werden.

Weist das Werkzeug dem gegenüber eine außen angreifende Auswerferplatte auf, ist die radiale Tiefe der radial innenseitig angeordneten Übergangsbereiche größer, bezogen auf die radiale Tiefe der radial äußeren Übergangsbereiche. Der Dichtring bleibt mit den tieferen Übergangsbereichen auf dem Kern der Auswerferseite hängen und kann mit der Auswerferplatte ausgeworfen werden.

Zumindest die Übergangsbereiche zwischen einander benachbart angeordneten dynamisch beanspruchten Dichtkanten könnten als mit einem Schmiermittel befüllbare Schmiermitteltaschen ausgebildet sein. Hierbei ist von Vorteil, dass die einander benachbarten, dynamisch beanspruchten Dichtkanten auch dann ausreichend gut geschmiert werden, wenn keine oder nur eine vernachlässigbar geringe Leckage aus dem abzudichtenden Raum in Richtung der dynamisch beanspruchten Dichtkanten austritt. Außerdem wird das Abdichtergebnis durch die mit einem Schmiermittel befüllten Schmiermitteltaschen nochmals verbessert.

Im Hinblick auf eine einfache und kostengünstige Herstellbarkeit des Dichtrings kann dieser einstückig und materialeinheitlich ausgebildet sein.

Für die meisten Anwendungsfälle sind Dichtringe aus einem thermoplastischen Polyurethan besonders gut geeignet, wobei die Dichtringe für die meisten Anwendungsfälle bevorzugt eine Härte Shore A von 80 bis 90 aufweisen. Thermoplastische Polyurethane haben im Gegensatz zu Elastomeren unter anderem die Vorteile einer besseren Abriebfestigkeit, einer besseren Zugfestigkeit, einer besseren Bruchdehnung, einer besseren Weiterreißfestigkeit und bessere Tieftemperatureigenschaften. Außerdem ist bei einem thermoplastischen Polyurethan die Möglichkeit der Herstellung in modernen und rationell arbeitenden Spritzgießmaschinen gegeben.

### Kurzbeschreibung der Zeichnung

Einige Ausführungsbeispiele des erfindungsgemäßen Dichtrings werden nachfolgend anhand der Figuren 1 bis 10 näher erläutert.

Diese zeigen, jeweils in schematischer Darstellung:
- Figur 1: ein erstes Ausführungsbeispiel eines Dichtrings, der durch ein Werkzeug mit innen angreifendem Pilzauswerfer hergestellt ist,
- Figur 2: ein zweites Ausführungsbeispiel, ähnlich dem Ausführungsbeispiel aus Figur 1 , hergestellt durch ein Werkzeug mit außen angreifender Auswerferplatte,
- Figur 3: ein drittes-Ausführungsbeispiel, ähnlich dem Ausführungsbeispiel aus Figur 1, mit stirnseitig einerseits angeordnetem Stützwulst,
- Figur 4: ein viertes Ausführungsbeispiel, ähnlich dem Ausführungsbeispiel aus Figur 2 mit stirnseitig einerseits angeordnetem Stützwulst,
- Figur 5: ein fünftes Ausführungsbeispiel, ähnlich dem Ausführungsbeispiel aus Figur 1, mit jeweils einem Stützwulst an beiden Stirnseiten,
- Figur 6: ein sechstes Ausführungsbeispiel, ähnlich den Ausführungsbeispielen aus den Figuren 2 und 5,
- Figur 7: ein siebtes Ausführungsbeispiel, ähnlich dem Ausführungsbeispiel aus Figur 1, wobei eine der Stirnseiten, in radialer Richtung betrachtet, eben ausgebildet ist,
- Figur 8: ein achtes Ausführungsbeispiel, ähnlich dem Ausführungsbeispiel aus Figur 2, wobei eine der Stirnseiten eben ausgebildet ist,
- Figur 9: ein neuntes Ausführungsbeispiel, ähnlich dem Ausführungsbeispiel aus Figur 7, wobei beide Stirnseiten eben ausgebildet sind,
- Figur 10: ein zehntes Ausführungsbeispiel, ähnlich dem Ausführungsbeispiel aus Figur 8, wobei beide Stirnseiten eben ausgebildet sind,
- Figur 11: ein Beispiel eines Pilzauswerfers,
- Figur 12: ein Beispiel einer Auswerferplatte.

### Ausführung der Erfindung

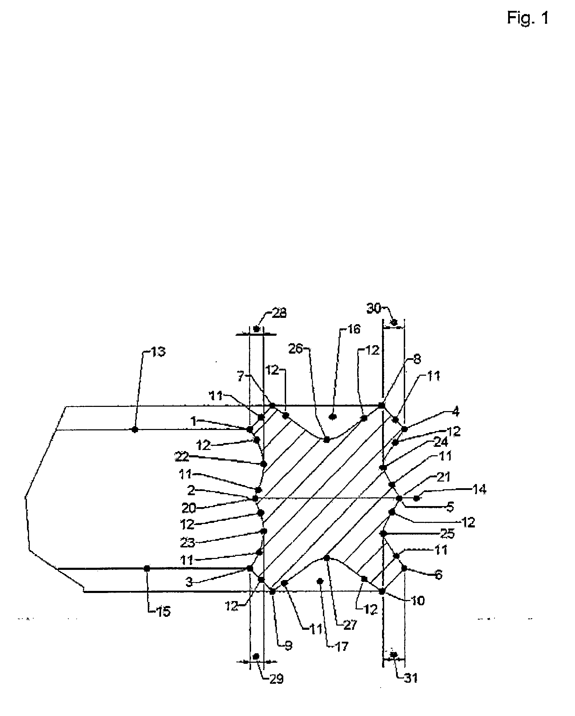

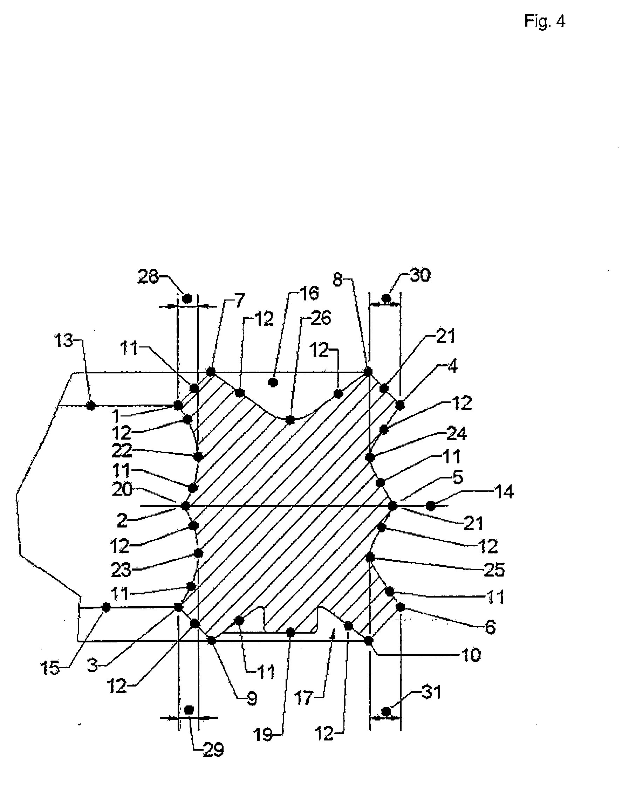

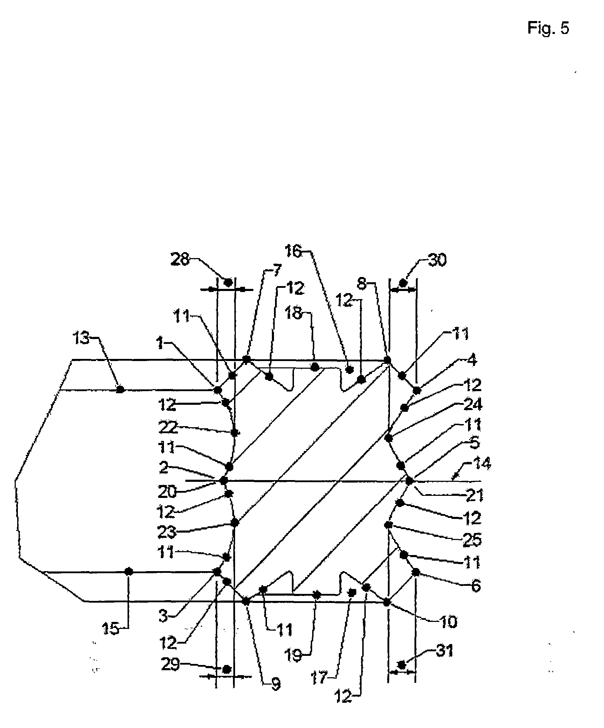

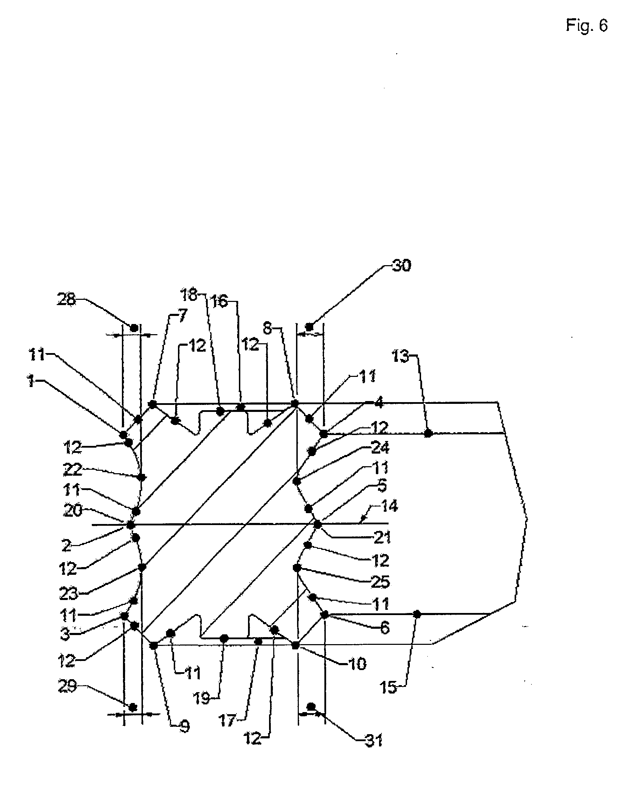

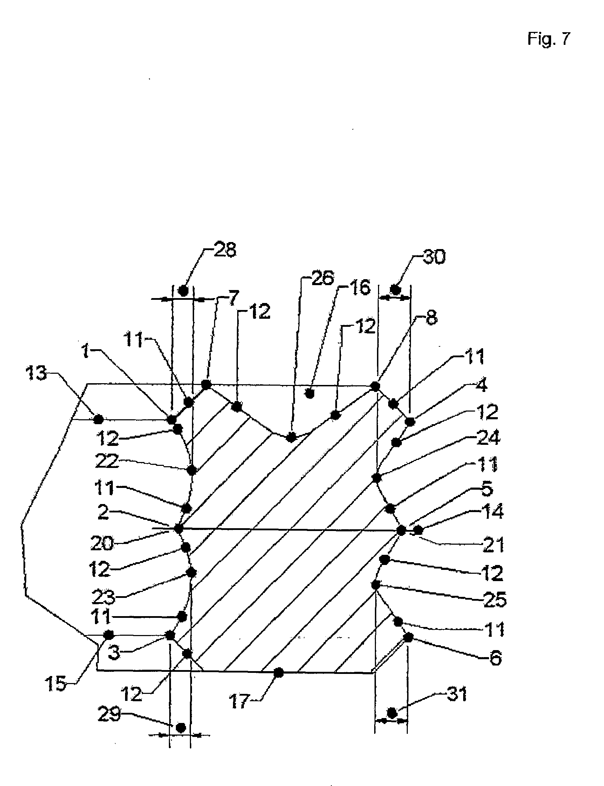

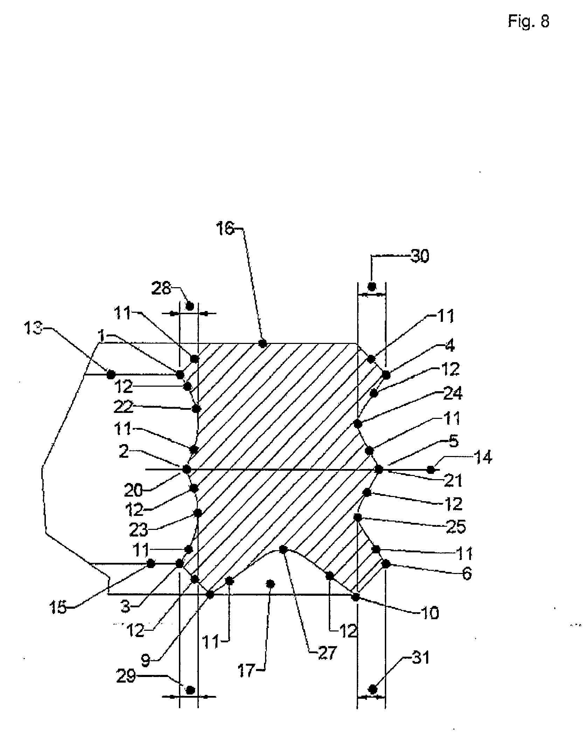

In den Figuren 1 bis 10 sind 10 Ausführungsbeispiele des erfindungsgemäßen Dichtrings gezeigt.

Jeder der Dichtringe weist zumindest 8 Dichtkanten 1 bis 8 auf, die jeweils durch einander durchschneidende Kegelfläche 11, 12, begrenzt sind.

### Die gezeigten Dichtringe werden durch unterschiedliche Verfahren hergestellt_

Die Ausführungsbeispiele aus den Figuren 1, 3, 5, 7 und 9 werden in einem Werkzeug hergestellt, das einen innen angreifenden Pilzauswerfer aufweist.

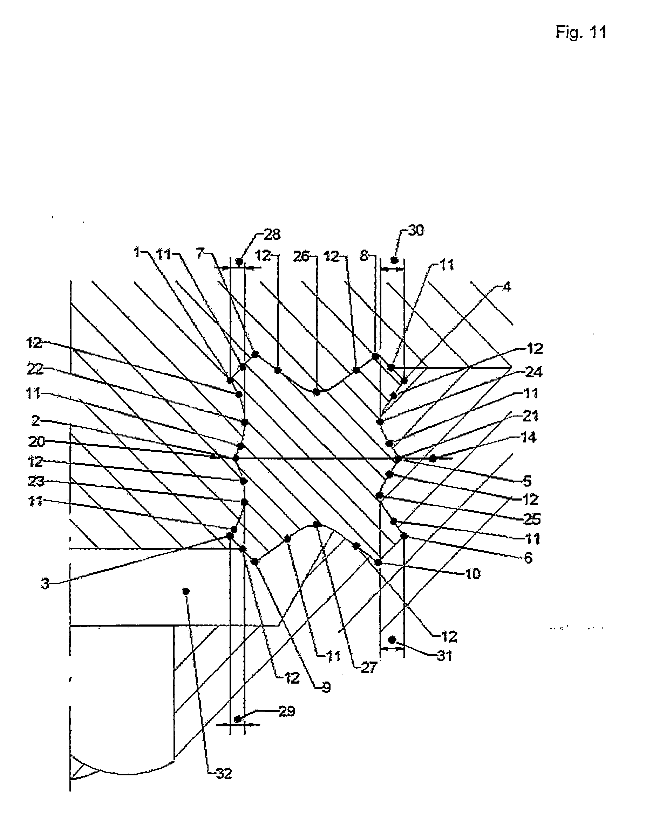

In Figur 11 ist ein Ausführungsbeispiel eines Pilzauswerfers gezeigt. Die Übergangsbereiche 24, 25 weisen jeweils eine größere projizierte Ringfläche auf, als die Übergangsbereiche 22, 23 am Innendurchmesser des Dichtrings. Somit bleibt der Dichtring mit seinen Übergangsbereichen 24, 25 auf der Auswerferseite hängen und kann mit dem Pilzauswerfer 32 aus dem Werkzeug ausgeworfen werden. Die Summe der projizierten Ringflächen der radial äußeren Übergangsbereiche 24, 25 ist größer als die Summe der projizierten Ringflächen der radial inneren Übergangsbereiche 22, 23.

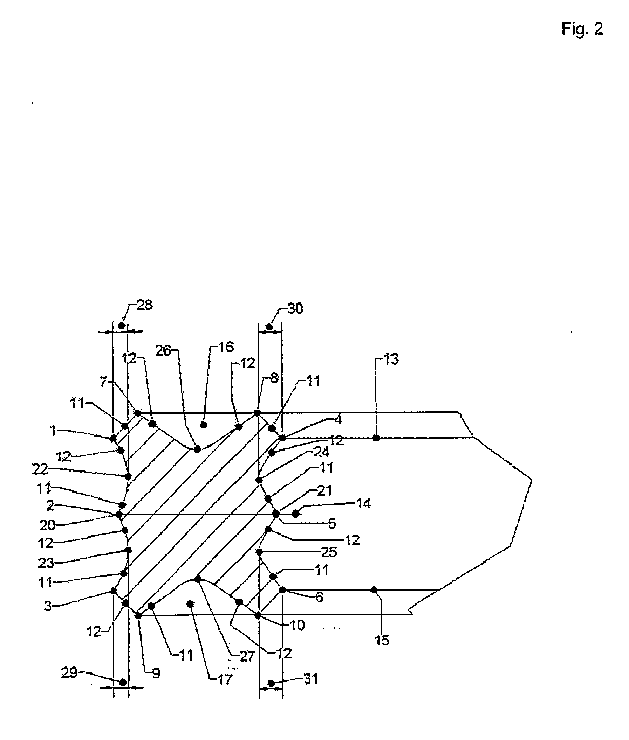

Dem gegenüber sind die Dichtringe aus den Figuren 2, 4, 6, 8 und 10 durch ein Werkzeug mit außen angreifender Auswerferplatte hergestellt.

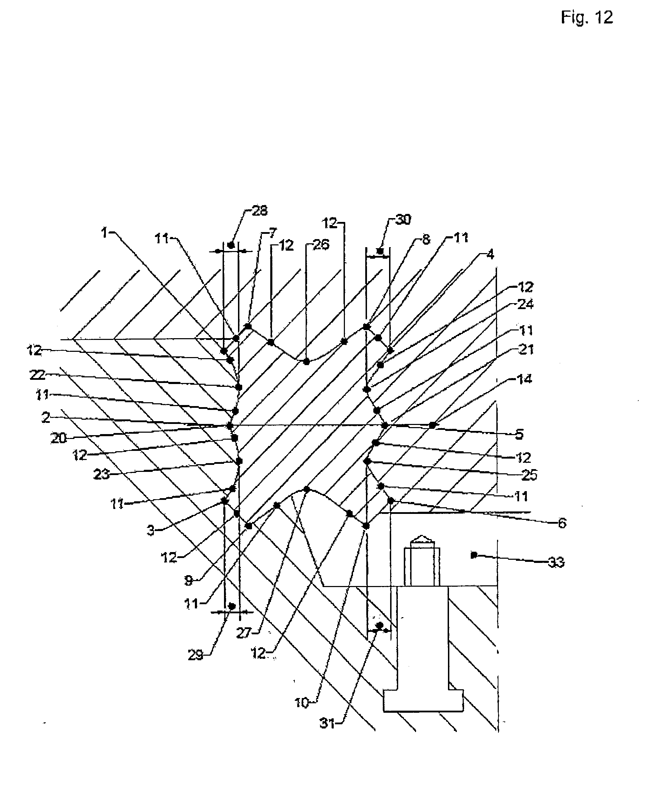

In Figur 12 ist ein Ausführungsbeispiel einer Auswerferplatte gezeigt. Die radial innenseitig angeordneten Übergangsbereiche 22, 23 haben, bezogen auf die radial außenseitig angeordneten Übergangsbereiche 24, 25 eine größere radiale Tiefe. Die Summe der projizierten Ringflächen der radial inneren Übergangsbereiche 22, 23 ist größer, als die Summe der projizierten Ringflächen der radial äußeren Übergangsbereiche 24, 25. Dadurch bleibt der Dichtring auf dem Kern der Auswerferseite hängen und kann mit der Auswerferplatte 33 ausgeworfen werden.

In Allen Ausführungsbeispielen sind drei der Dichtkanten 1, 2, 3 radial innenseitig und drei der Dichtkanten 4, 5, 6 radial außenseitig angeordnet, wobei zwischen den inneren Radialdichtkanten 1 und 2 sowie 2 und 3 die konkav gestalteten Übergangsbereiche 22, 23 und zwischen den äußeren Radialdichtkanten 4, 5; 5, 6 die ebenfalls konkav gestalteten Übergangsbereiche 24, 25 angeordnet sind. Die etwas flachere konkave Wölbung zwischen den inneren Radialdichtkanten ist ein Hinweis darauf, dass diese Dichtringe durch ein Werkzeug mit innen angreifendem Pilzauswerfer hergestellt sind. Dem gegenüber deuten die flacheren Übergangsbereiche 24, 25 zwischen den äußeren Radialdichtkanten 4, 5; 5, 6 auf ein Herstellungsverfahren mittels eines Werkzeugs mit außen angreifender Auswerferplatte hin.

Jeder der gezeigten Dichtringe weist 10 Dichtkanten 1-10 auf, die alle durch einander durchschneidende Kegelflächen 11, 12 begrenzt sind, Die inneren Radiaidichtkanten 1, 2, 3 und die äußeren Radialdichtkanten 4, 5, 6 sind einander jeweils in einer gedachten Radialebene 13, 13, 15 radial gegenüberliegend angeordnet.

Die Ausführungsbeispiele aus den Figuren 1, 2,5, 6, 9 und 10 sind jeweils zu einer gedachten, axial mittig angeordneten Radialebene 14 symmetrisch ausgebildet, wobei die axial mittig angeordneten Radialdichtkanten 2, 5 in den hier gezeigten Ausführungsbeispielen einen größeren Dichtkantenradius 20, 21 aufweisen, als die jeweils axial beiderseits benachbart angeordneten Radialdichtkanten 1, 3; 4,6.

Durch das Fertigungsverfahren "innen angreifender Pilzauswerfer" entstehen Dichtringe, deren Übergangsbereiche 22, 23 zwischen den inneren Radialdichtkanten 1, 2; 2, 3 eine geringe radiale Tiefe 28, 29 aufweisen, als die Ü'bergangsbereiche 24, 25 zwischen den äußeren Radialdichtkanten 4,5; 5,6.

Dem gegenüber entstehen durch das Fertigungsverfahren "außen angreifende Auswerferplatte" Dichtringe, mit Übergangsbereichen 24, 25 zwischen den äußeren Radialdichtkanten 4, 5; 5,6, die eine geringe radiale Tiefe 30, 31 aufweisen, als die Übergangsbereiche 22, 23 zwischen den inneren Radialdichtkanten 1, 2; 2,3.

In den Ausführungsbeispielen gemäß Figuren 1 bis 8 weist zumindest eine der beiden Stirnseiten 16, 17 zwei Axialdichtkanten 7, 8; 9, 10 auf, die einander mit radialem Abstand benachbart zugeordnet sind. Auch diese Axialdichtkanten 7, 8; 9, 10 sind jeweils durch einander durchschneidende Kegelfläche 11, 12, begrenzt.

In den Figuren 1 bis 6 haben beide Stirnseiten 16, 17 jeweils zwei Axialdichtkanten 7, 8; 9, 10. Auch hier sind die Übergangsbereiche 26, 2T zwischen den jeweils inneren Axialdichtkanten 7, 9 und den äußeren Axialdichtkanten 8, 10 konkav ausgebildet.

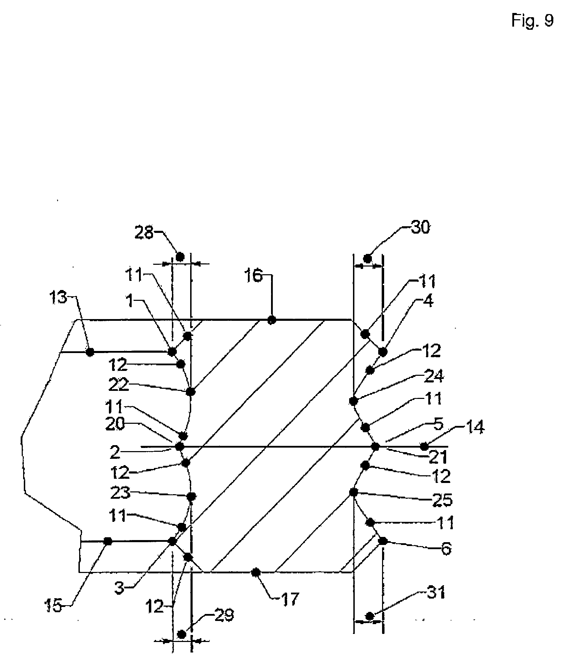

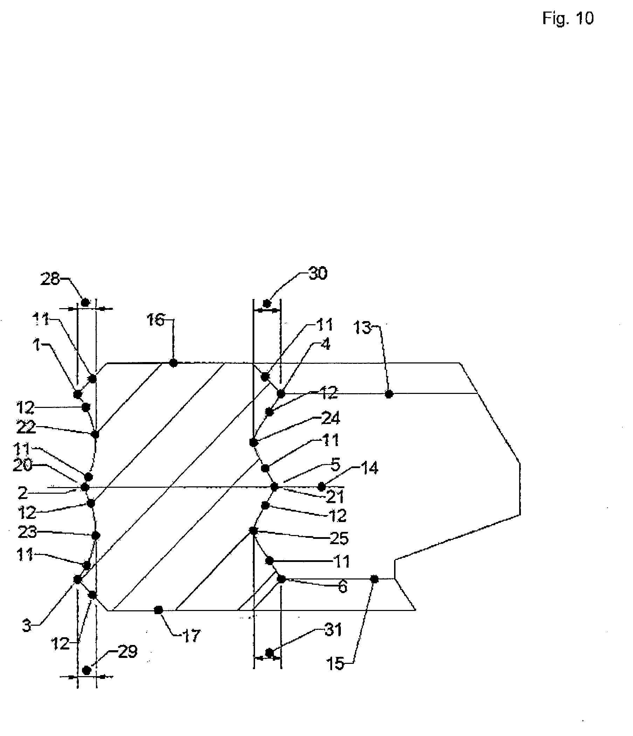

Dem gegenüber sind die Übergangsbereiche 26, 27 zwischen den Dichtkanten 7, 8; 9, 10 in den Figuren 9 und 10 in radialer Richtung eben ausgebildet.

Die Übergangsbereiche, die dynamisch beanspruchte Dichtkanten miteinander verbinden, sind in den hier gezeigten Ausführungsbeispielen als Schmiermitteltaschen ausgebildet, die beispielsweise mit einem Schmierfett befüllt sind.

Alle gezeigten Dichtringe sind einstückig und materialeinheitlich ausgebildet, bestehen aus einem thermoplastischen Polyurethan und weisen eine Härte Shore A von 80 bis 90 auf.

Alle hier dargestellten Dichtringe sind durch ihre Geometrie während des Einbaus und während der bestimmungsgemäßen Verwendung sicher vor einer unerwünschten Verdrehung / Verdrillung. Durch die Dichtkanten 1 bis 10, die durch einander durchschneidende Kegelflächen 11, 12 begrenzt sind, wird wegen der hohen spezifischen Flächenpressung eine gute Abdichtung auch dann erreicht, wenn der Dichtring innerhalb seines Einbauraums nur gering verpresst ist.

Sowohl durch das Fertigungsverfahren "innen angreifender Pilzauswerfer" als auch das Verfahren "außen angreifende Auswerferplatte" entstehen Dichtringe, deren Funktionsflächen frei von Pressgraten sind. Beide Fertigungsverfahren gehören zur Spritzguss-Technologie. Im Anschluss an das Auswerfen der Dichtringe aus dem Werkzeug sind diese gebrauchsfertig; sowohl das Verfahren innen angreifender Pilzauswerfer" als auch das Verfahren "außen angreifende Auswerferplatte" ermöglichen eine endbearbertungsfreie Herstellbarkeit der Dichtringe.

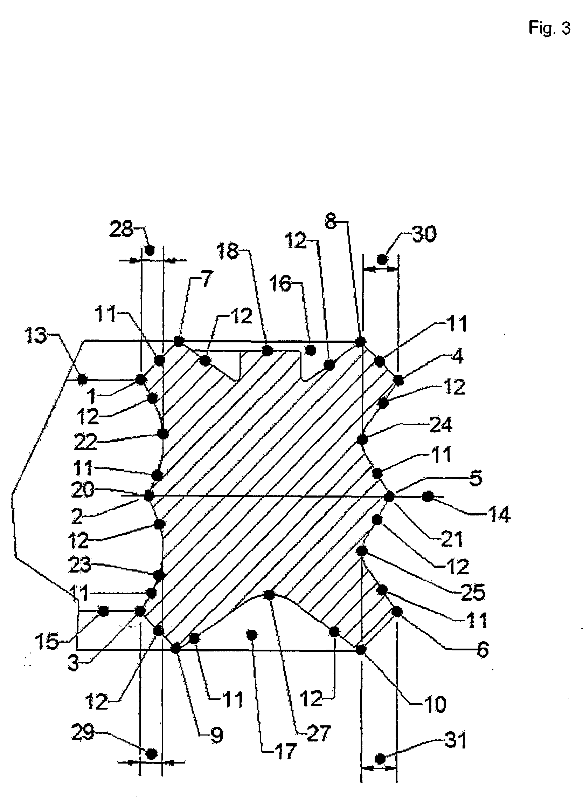

In den Figuren 3, 4, 5 und 6 ist jeweils ein Ausführungsbeispiel gezeigt, bei dem zumindest im Bereich einer der beiden Stirnseiten 16, 17 zwei Axialdichtkanten 7, 8; 9, 10 vorgesehen sind, wobei zwischen den radial einander benachbarten Axialdichtkanten 7, 8; 9, 10 ein Stützwulst 18, 19 angeordnet ist. Bei axialer Differenzdruckbeaufschlagung verhindert der Stützwulst 18, 19, dass die Axialdichtkanten 7, 8; 9, 10 unerwünscht großen mechanischen Verformungen ausgesetzt sind.

## Patentansprüche

1. Dichtring, umfassend zumindest 8 Dichtkanten (1, 2, 3, 4, ..., 10).

2. Dichtring nach Anspruch 1, **dadurch gekennzeichnet, dass** die Dichtkanten (1, 2, 3, 4, ..., 10) jeweils durch einander durchschneidende Kegelflächen (11, 12) begrenzt sind.

3. Dichtring nach einem der Ansprüche 1 oder 2, **dadurch gekennzeichnet, dass** drei der Dichtkanten (1, 2, 3) radial innenseitig und drei der Dichtkanten (4, 5, 6) radial außenseitig angeordnet sind und dass die inneren Radialdichtkanten (1, 2, 3) und die äußeren Radialdichtkanten (4, 5, 6) einander jeweils mit axialem Abstand benachbart zugeordnet sind.

4. Dichtring nach einem der Ansprüche 1 bis 3, **dadurch gekennzeichnet, dass** die inneren und die äußeren Radialdichtkanten (1, 4; 2, 5; 3, 6) in einer gedachten Radialebene (13, 14, 15) radial gegenüber liegend angeordnet sind.

5. Dichtring nach einem der Ansprüche 1 bis 4, **dadurch gekennzeichnet, dass** zumindest eine der beiden Stirnseiten (16, 17) zwei Axialdichtkanten (7, 8; 9, 10) aufweist, die einander mit radialem Abstand benachbart zugeordnet sind und jeweils durch einander durchschneidende Kegelflächen (11, 12) begrenzt sind.

6. Dichtring nach Anspruch 5, **dadurch gekennzeichnet, dass** beide Stirnseiten (16, 17) jeweils zwei Axialdichtkanten (7, 8; 9, 10) aufweisen.

7. Dichtring nach einem der Ansprüche 5 oder 6, **dadurch gekennzeichnet, dass** radial zwischen den einander benachbarten Axialdichtkanten (7, 8; 9, 10) zumindest einer Stirnseite (16, 17) ein zumindest teilweise umlaufender Stützwulst (18, 19) angeordnet ist, der eine geringere Erstreckung in axialer Richtung aufweist, als die Axialdichtkanten (7, 8; 9, 10).

8. Dichtring nach einem der Ansprüche 1 bis 7, **dadurch gekennzeichnet, dass** er zu einer gedachten, axial mittig angeordneten Radialebene (14) symmetrisch ausgebildet ist.

9. Dichtring nach einem der Ansprüche 1 bis 8, **dadurch gekennzeichnet, dass** die axial mittig angeordneten Radialdichtkanten (2, 5) einen größeren Dichtkantenradius (20, 21) aufweisen, als die jeweils axial beiderseits benachbart angeordneten Radialdichtkanten (1, 3; 4,6).

10. Dichtring nach einem der Ansprüche 1 bis 9, **dadurch gekennzeichnet, dass**, mit Ausnahme der mittig angeordneten Radialdichtkanten (2, 5), alle Dichtkanten (1, 3, 4, 6, 7, 8, 9, 10) übereinstimmend ausgebildet sind.

11. Dichtring nach einem der Ansprüche 1 bis 10, **dadurch gekennzeichnet, dass** die Übergangsbereiche (22, 23, 24, 25, 26, 27) zwischen den jeweils axial benachbarten Radialdichtkanten (1, 2; 2, 3; 4, 5; 5, 6) und/oder zwischen den jeweils radial benachbarten Axialdichtkanten. (7, 8; 9, 10), im Längsschnitt betrachtet, konkav ausgebildet sind.

12. Dichtring nach Anspruch 11, **dadurch gekennzeichnet, dass** die Übergangsbereiche (22, 23; 24, 25) zwischen den inneren (1, 2; 2, 3) oder äußeren Radialdichtkanten (4, 5; 5, 6) eine geringere radiale Tiefe (2-8, 29; 30, 31) aufweisen, als die Übergangsbereiche (24, 25; 22, 23) zwischen den äußeren (4, 5; 5, 6) oder inneren Radialdichtkanten (1, 2; 2,3),

13. Dichtring nach einem der Ansprüche 11 oder 12, **dadurch gekennzeichnet, dass** zumindest die Übergangsbereiche (22, 23) zwischen einander benachbart angeordneten dynamisch beanspruchten Dichtkanten (1, 2; 2, 3) als mit einem Schmiermittel befüllbare Schmiermitteltaschen ausgebildet sind.

14. Dichtring nach einem der Ansprüche 1 bis 13, **dadurch gekennzeichnet, dass** er einstückig und materialeinheitlich ausgebildet ist.

15. Dichtring nach Anspruch 14, **dadurch gekennzeichnet, dass** er aus einem thermoplastischen Polyurethan besteht.

16. Dichtring nach einem der Ansprüche 1 bis 15, **dadurch gekennzeichnet, dass** er eine Härte Shore A von 80 bis 90 aufweist.

## Geänderte Patentansprüche

### Geänderte Patentansprüche gemäss Regel 86(2) EPÜ.

**1.** Dichtring, umfassend zumindest acht Dichtkanten (1, 2, 3, 4, ..., 10) wobei Übergangsbereiche (22, 23, 24, 25, 26, 27) zwischen den jeweils axial benachbarten Radialdichtkanten (1, 2; 2, 3; 4, 5; 5, 6) und/oder zwischen den jeweils radial benachbarten Axialdichtkanten (7, 8; 9, 10), im Längsschnitt betrachtet, konkav ausgebildet sind, wobei die Übergangsbereiche (22, 23; 24, 25) zwischen den inneren (1, 2; 2, 3) oder äußeren Radialdichtkanten (4, 5; 5, 6) eine geringere radiale Tiefe (28, 29; 30, 31) aufweisen, als die Übergangsbereiche (24, 25; 22, 23) zwischen den äußeren (4, 5; 5, 6) oder inneren Radialdichtkanten (1, 2; 2, 3), wobei der Dichtring einstückig und materialeinheitlich ausgebildet ist, **dadurch gekennzeichnet, dass** der Dichtring aus einem thermoplastischen Polyurethan besteht.

**2.** Dichtring nach Anspruch 1, **dadurch gekennzeichnet, dass** die Dichtkanten (1, 2, 3, 4, ..., 10) jeweils durch einander durchschneidende Kegelflächen (11, 12) begrenzt sind.

**3.** Dichtring nach einem der Ansprüche 1 oder 2, **dadurch gekennzeichnet, dass** drei der Dichtkanten (1, 2, 3) radial innenseitig und drei der Dichtkanten (4, 5, 6) radial außenseitig angeordnet sind und dass die inneren Radialdichtkanten (1, 2, 3) und die äußeren Radialdichtkanten (4, 5, 6) einander jeweils mit axialem Abstand benachbart zugeordnet sind.

**4.** Dichtring nach einem der Ansprüche 1 bis 3, **dadurch gekennzeichnet, dass** die inneren und die äußeren Radialdichtkanten (1, 4; 2, 5; 3, 6) in einer gedachten Radialebene (13,14,15) radial gegenüber liegend angeordnet sind.

**5.** Dichtring nach einem der Ansprüche 1 bis 4, **dadurch gekennzeichnet, dass** zumindest eine der beiden Stirnseiten (16,17) zwei Axialdichtkanten (7, 8; 9,10) aufweist, die einander mit radialem Abstand benachbart zugeordnet sind und jeweils durch einander durchschneidende Kegelflächen (11, 12) begrenzt sind.

**6.** Dichtring nach Anspruch 5, **dadurch gekennzeichnet, dass** beide Stirnseiten (16, 17) jeweils zwei Axialdichtkanten (7, 8; 9, 10) aufweisen.

**7.** Dichtring nach einem der Ansprüche 5 oder 6, **dadurch gekennzeichnet, dass** radial zwischen den einander benachbarten Axialdichtkanten (7, 8; 9, 10) zumindest einer Stirnseite (16, 17) ein zumindest teilweise umlaufender Stützwulst (18, 19) angeordnet ist, der eine geringere Erstreckung in axialer Richtung aufweist, als die Axialdichtkanten (7, 8; 9, 10).

**8.** Dichtring nach einem der Ansprüche 1 bis 7, **dadurch gekennzeichnet, dass** der Dichtring zu einer gedachten, axial mittig angeordneten Radialebene (14) symmetrisch ausgebildet ist.

**9.** Dichtring nach einem der Ansprüche 1 bis 8, **dadurch gekennzeichnet, dass** die axial mittig angeordneten Radialdichtkanten (2, 5) einen größeren Dichtkantenradius (20, 21) aufweisen, als die jeweils axial beiderseits benachbart angeordneten Radialdichtkanten (1, 3; 4,6).

**10.** Dichtring nach einem der Ansprüche 1 bis 9, **dadurch gekennzeichnet, dass**, mit Ausnahme der mittig angeordneten Radialdichtkanten (2, 5), alle Dichtkanten (1, 3, 4, 6, 7, 8, 9, 10) übereinstimmend ausgebildet sind.

**11.** Dichtring nach einem der Ansprüche 1 bis 10, **dadurch gekennzeichnet, dass** zumindest die Übergangsbereiche (22, 23) zwischen einander benachbart angeordneten dynamisch beanspruchten Dichtkanten (1, 2; 2, 3) als mit einem Schmiermittel befüllbare Schmiermitteltaschen ausgebildet sind.

**12.** Dichtring nach einem der Ansprüche 1 bis 11, **dadurch gekennzeichnet, dass** der Dichtring eine Härte Shore A von 80 bis 90 aufweist.
